(19) Europäisches Patentamt

European Patent Office

Office européen des brevets

(11) Numéro de publication: **0 493 279 B1**

(12) **FASCICULE DE BREVET EUROPEEN**

(45) Date de publication de fascicule du brevet: **24.08.94** (51) Int. Cl.⁵: **B03B 4/00**, B65G 53/22, B65G 53/66

(21) Numéro de dépôt: **91420462.3**

(22) Date de dépôt: **20.12.91**

(54) **Dispositif de séparation d'une matière en lit fluidisé et de détection de colmatage.**

(30) Priorité: **26.12.90 FR 9016572**

(43) Date de publication de la demande:
**01.07.92 Bulletin 92/27**

(45) Mention de la délivrance du brevet:
**24.08.94 Bulletin 94/34**

(84) Etats contractants désignés:
**DE ES FR GB GR IT NL**

(56) Documents cités:
DE-A- 2 461 093    DE-A- 3 631 182
FR-A- 2 358 461    FR-A- 2 391 136
FR-A- 2 575 680    FR-A- 2 575 734

(73) Titulaire: **ALUMINIUM PECHINEY**
**Immeuble Balzac**
**10, place des Vosges**
**La Défense 5**
**F-92400 Courbevoie (FR)**

(72) Inventeur: **Rambaud, René Cyrille**
**Villa "Douce Ouiétude",**
**9, route de St Omer**
**F-59380 Socx par Bergues (FR)**

(74) Mandataire: **Jacquet, Michel et al**
**PECHINEY**
**28, rue de Bonnel**
**F-69433 Lyon Cédex 03 (FR)**

**Description**

La présente invention concerne tout dispositif mettant en oeuvre une matière pulvérulente à l'état de lit fluidisé en vue,ou de sa distribution à partir d'une capacité,ou de son transport,ou d'un traitement physique de séparation des corps étrangers mélangés avec elle.

Il est connu de transporter d'un point à un autre des matériaux pulvérulents à l'état fluidisé.Un matériau est dit fluidisable s'il se présente sous forme pulvérulente et si sa granulométrie et sa cohésion sont telles que l'air insufflé,même à faible vitesse,provoque la décohésion des particules entre elles et la réduction des forces de frottement interne en sorte que la suspension ainsi formée se comporte comme un fluide homogène.De tels matériaux sont,par exemple l'alumine, les ciments et plâtres,la chaux,les cendres volantes,le fluorure de calcium,les charges pour le caoutchouc et le plastique,les catalyseurs,le charbon pulvérisé,les sulfates et phosphates,les poudres métalliques,les matériaux plastiques en poudre,les produits alimentaires tels que fécules,lait en poudre,farines,etc...

L'état de la technique antérieure peut être décrit par trois brevets déposés par la demanderesse auxquels l'invention objet de la présente demande peut s'appliquer.

Le brevet français FR-A-2 575 734 intitulé "Dispositif de distribution à débit régulé d'une matière pulvérulente fluidisable" décrit un dispositif permettant la régulation d'un débit de matière fluidisable,en l'espèce de l'alumine.

Le brevet français FR-A-2 575 680 intitulé "Dispositif à lit fluidisé pour la séparation continue de deux phases solides mélangées" décrit un dispositif permettant de séparer dans un produit composé de particules fines fluidisables les amas de particules agglomérées inaptes à la fluidisation.

Le brevet français FR-A-2 391 136 intitulé "Procédé d'autorégulation d'un transport pneumatique" décrit un procédé et un dispositif pour la régulation automatique du débit dans un système de transport en lit fluidisé ne faisant pas intervenir d'organe mécanique.

Le document DE-A-2 461 093 décrit un dispositif comme dans la préambule de la revendication 1

Le dispositif objet de l'invention peut, ainsi que nous l'avons dit s'appliquer à chacun des dispositifs et procédés ci-dessus.

Le dispositif décrit dans le brevet français FR 2 575 734 comprend:(figure 1)

- une capacité de stockage (1) remplie d'alumine reliée au caisson (2) par une colonne d'alimentation (3),débouchant du côté (7A) du caisson(à gauche sur la figure)
- un caisson (2) qui comporte:

   à sa partie inférieure (2B),une paroi poreuse de fluidisation (4) et une arrivée (5) de gaz de fluidisation à pression constante et réglable.

   à sa partie supérieure (2A),à l'extrémité (7B) opposée à celle de la colonne d'alimentation,une colonne (6) d'équilibrage et de dégazage.

   sur la face d'extrémité (7B) correspondant à la colonne d'équilibrage et immédiatement au dessus de la paroi poreuse (4), un orifice de sortie (8) de la matière pulvérulente fluidisée.

En l'absence de gaz de fluidisation,la matière pulvérulente stockée dans la capacité (1) descend dans le caisson (2) en formant un talus d'éboulement (10) dont l'angle avec la paroi poreuse de fluidisation dépend de la nature et de l'état physique de la matière pulvérulente.

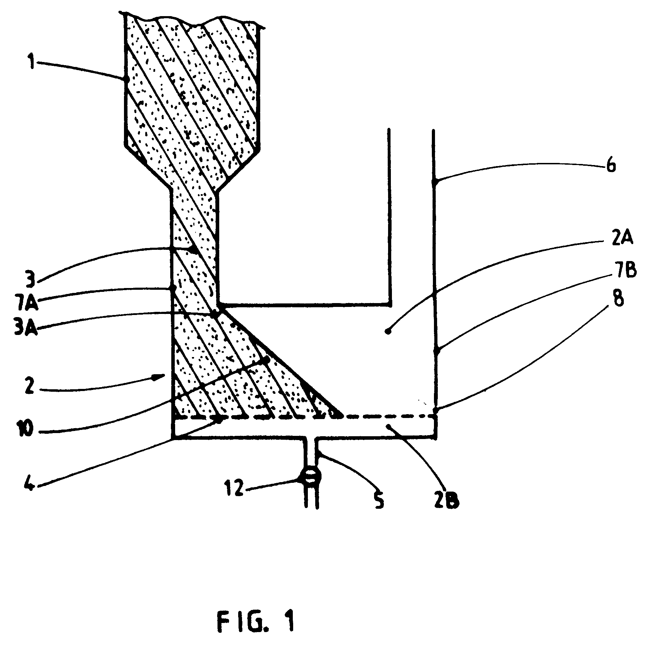

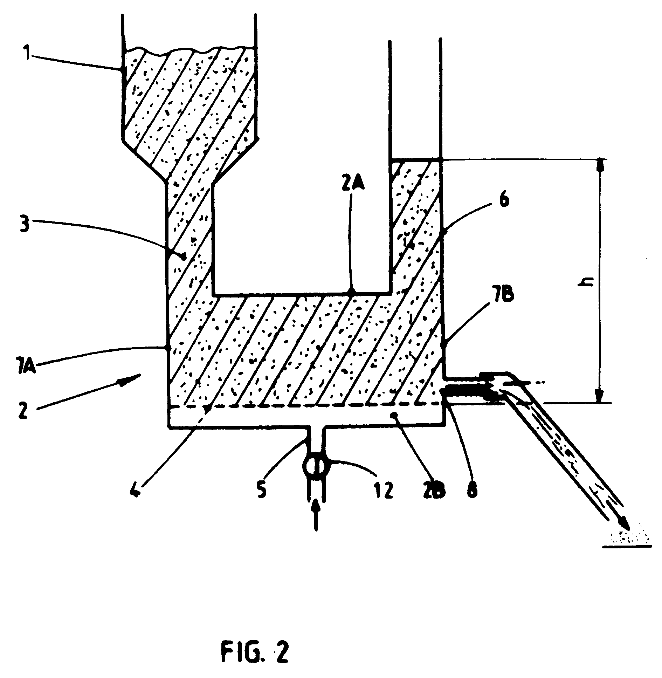

Lorsque l'on envoie le gaz de fluidisation,l'orifice (8) étant fermé,par la canalisation (5) et le moyen de réglage (12) au travers de la paroi poreuse (4),la matière pulvérulente commence à se fluidiser;elle remplit rapidement la partie supérieure du caisson puis monte peu à peu dans la colonne d'équilibrage jusqu'à une certaine hauteur h (Figure 2 ) fonction de la pression de fluidisation $P_f$ et de la densité moyenne de la matière pulvérulente dans la colonne d'équilibrage (6).Le calcul montre et l'expérience confirme que lorsque le système est en équilibre,pour une matière pulvérulente et un diamètre d'orifice (8) donnés,le débit de matière est uniquement fonction de la pression du gaz de fluidisation,ce qui procure un moyen commode de réglage de ce débit.

En réalité,la pression de fluidisation $P_f$ est équilibrée par la pression hydrostatique due à la hauteur h de lit fluidisé dans la colonne d'équilibrage augmentée de la perte de charge dans la paroi poreuse.La relation bi-univoque entre la pression de fluidisation $P_f$ et le débit de matière suppose donc que la perte de charge dans la paroi poreuse ne change pas,c'est-à-dire que cette paroi ne se colmate pas.

Cela est le cas lorsqu'il s'agit de matières parfaitement propres et de granulométrie régulière constituant une seule phase fluidisable.Mais lorsque le matériau à distribuer forme deux phases solides dont l'une a tendance à décanter dans les conditions de fluidisation,cette phase, décantée sur la paroi poreuse augmente la perte de charge au travers de cette paroi.Il en résulte,à pression de fluidisation constante,une diminution de la hauteur h du matériau fluidisé dans la colonne d'équilibrage et,partant,du débit au travers de l'orifice (8).

Ce problème se pose particulièrement dans deux cas:
- avec l'alumine fraîche qui contient des particules lourdes de briques réfractaires appelées "sables" qui se sont mélangées à l'alumine lors de sa calcination.
- dans le système d'alimentation des cuves d'électrolyse d'alumine,où l'on recycle de l'alumine qui a été utilisée pour capter les gaz fluorés émis par les cuves.Cette alumine,chargée des produits captés,tend à former des agglomérés compacts,appelés en terme de métier "scales"qui se déposent sur la paroi poreuse.

L'invention a pour objet de proposer un moyen de suivre en continu le degré de colmatage de la paroi poreuse de façon à pouvoir intervenir en temps utile pour la nettoyer.

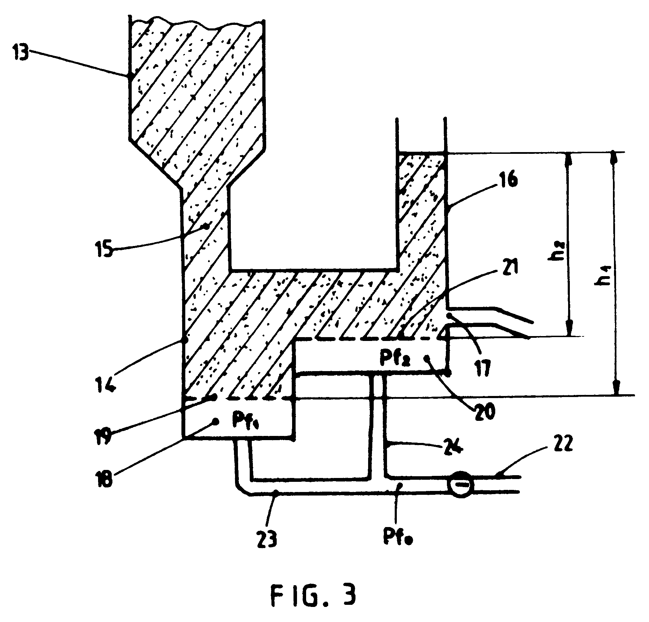

La solution apportée au problème par les inventeurs est illustrée par les figures 3 à 5.

Il est utile de rappeler tout d'abord les relations entre les différentes grandeurs qui régissent la fluidisation.

La pression de fluidisation $P_f$ est égale à:

$$P_f = P_c + d.h$$

où
- $P_c$ est la perte de charge à travers la paroi poreuse
- $d$ est la masse spécifique de la matière pulvérulente à l'état fluidisé
- $h$ est la hauteur de matière pulvérulente dans la colonne d'équilibrage.

D'autre part, $P_c = k.v$
où
- $k$ est le coëfficient de perte de charge de la paroi poreuse.
- $v$ est la vitesse de l'air à travers la paroi poreuse.

Dans les conditions industrielles habituelles de ces systèmes,la vitesse d'écoulement de l'air de fluidisation est en effet toujours assez faible pour que le régime de l'écoulement soit laminaire et donc que les pertes de charge à travers la paroi poreuse soient proportionnelles à la vitesse.

Les inventeurs ont tout d'abord constaté que les "sables" ou "scales",du fait de leur inaptitude à la fluidisation vont se déposer sur la partie de la paroi poreuse située directement ou à proximité de la colonne d'alimentation (3).

A partir de cette constatation,ils ont imaginé le dispositif représenté en coupe verticale sur la figure 3.

On retrouve la capacité de stockage (13) reliée au caisson (14) par une conduite d'alimentation (15),la colonne d'équilibrage (16) et l'orifice de sortie de la matière pulvérulente (17).Le caisson de section horizontale généralement rectangulaire se présente,en section verticale en deux parties,à gauche et à droite sur la figure:

A gauche sur la figure,donc du côté de la conduite d'alimentation,la chambre de fluidisation (18) et la paroi poreuse (19) sont à un niveau inférieur à celui de la chambre de fluidisation (20) et de la paroi poreuse (21) de la partie du caisson située à droite sur la figure, du côté de la colonne d'équilibrage et de l'orifice de sortie (17).Les deux chambres de fluidisation (18) et (20) sont alimentées par une canalisation commune (22) se subdivisant en deux branches (23) et (24).

En début de fonctionnement,lorsque l'on admet le gaz de fluidisation,les pressions s'équilibrent de la façon suivante:

La pression de fluidisation dans la partie gauche de la figure $P_{f1}$ est égale à la somme de deux termes:la perte de charge dans la paroi poreuse,proportionnelle à la vitesse du gaz de fluidisation et la pression barométrique du lit fluidisé dans la colonne d'équilibrage,proportionnelle à la hauteur de cette colonne $h_1$:

$$P_{f1} = P_{c1} + d.h_1$$

où $P_{c1}$ est la perte de charge au travers de la paroi poreuse et $d$ la densité apparente du lit fluidisé.

De même,la pression de fluidisation dans la partie droite de la figure $P_{f2}$ est égale à:

$$P_{f2} = P_{c2} + d.h_2$$

On observera donc une pression différentielle

$$P_{f1} - P_{f2} = d.( h_1 - h_2 ) + P_{c1} - P_{c2}$$

Or $P_{c1} = k_1.v_1$ et $P_{c2} = k_2.v_2$

3

Les parois poreuses (19) et (21) étant identiques, tant que ces deux parois restent propres et exemptes de "sables" ou de "scales", $k_1 = k_2$

Au contraire dès que ces "sables" ou "scales" se déposent sur la paroi 19,la perte de charge dans cette paroi augmente et devient:

$$P_{c1} = (k_1 + k_x).v_1$$

où $k_x$ est un coëfficient de perte de charge variable croissant avec l'encrassement de la paroi poreuse (19).

Finalement on a donc:

$$P_{f1} - P_{f2} = d.(h_1 - h_2) + (k_1 + k_x).v_1 - k_2.v_2$$

La différence $h_1 - h_2$ dépend uniquement de la différence de cote entre les parois poreuses des deux parties du caisson,donc de la géométrie de l'appareil.

La densité apparente d est également constante et ne dépend que du produit fluidisé.

Les coëfficients $k_1$ et $k_2$ ne dépendent que des caractéristiques des parois poreuses.Le coëfficient $k_x$ augmente à partir de zéro avec l'encrassement de la paroi poreuse (19).

Par contre,les vitesses $v_1$ et $v_2$ dépendent des conditions d'alimentation en air de fluidisation.Si l'on appelle $P_{f0}$ la pression dans la tuyauterie au point situé juste avant l'embranchement alimentant les parois poreuses (19) et (21),on peut obtenir la valeur de $v_1$ par exemple en résolvant le système:

$$P_{f1} = (k_1 + k_x).v_1 + d.h_1$$
$$P_{f1} = P_{f0} - P_{ct1}$$

où $P_{ct1}$ est la perte de charge dans la tuyauterie alimentant le caisson (18).

$P_{ct1}$ est proportionnel au carré du débit,donc au carré de la vitesse de l'air traversant la surface $S_1$ de la paroi poreuse (19):

$$P_{ct1} = A.(v_1)^2.$$

Le coëfficient A dépend des caractéristiques géométriques de la conduite et est proportionnel à la surface de la paroi poreuse $S_1$,mais pour une installation donnée,il est constant.

La résolution du système conduit à une équation du deuxième degré qui permet de calculer $v_1$.

On trouve finalement:

$$v_1 = \frac{(k_1 + k_x) + ((k_1 + k_x)^2 - 4.A.(d.h_1 - P_{f0}))^{1/2}}{2A}$$

De la même manière, on peut calculer $v_2$ en résolvant le système:

$$P_{f2} = k_2.v_2 + d.h_2$$
$$P_{f2} = P_{f0} - P_{ct2}$$

avec

$$P_{ct2} = B.(v_2)^2$$

B étant,comme A un coëfficient de proportionnalité ne dépendant que de la géométrie de la tuyauterie et de la surface $S_2$ de la paroi poreuse (21).

4

EP 0 493 279 B1

On trouve finalement:

$$v_2 =$$

$$\frac{-k_2 + (k_2^2 - 4.B.(d.h_2 - P_{f0}))^{1/2}}{2.A}$$

Il est intéressant de voir :

a) comment varie la différence de pression $P_{f1} - P_{f2}$ en fonction de $k_x$, degré d'encrassement de la paroi (19).

b) comment varie la vitesse $v_1$ à travers la paroi (19) en fonction du degré d'encrassement de cette paroi.

a) En reportant les valeurs de $v_1$ et de $v_2$ dans l'expression de $P_{f1} - P_{f2}$ écrite plus haut, on constate que la pression différentielle $P_{f1} - P_{f2}$ est la somme de trois termes:

- un terme constant : $d.(h_1 - h_2)$ qui est fonction de la géométrie de l'appareil par la hauteur $h_1 - h_2$.
- un terme : $(k_1 + k_x).v_1$ qui dépend:
  - d'un certain nombre de constantes liées à la construction de l'appareil.
  - de la pression de réglage $P_{f0}$.
  - du coëfficient $k_x$ degré d'encrassement de la paroi poreuse (19) sur laquelle décantent les "sables" et les "scales".
- un terme : $k_2.v_2$, qui dépend de constantes liées à la construction de l'appareil et de la pression de réglage $P_{f0}$.

L'analyse de la fonction $P_{f1} - P_{f2} = f(k_x)$ montre qu'elle est croissante quand $k_x$ croît. L'écart de pression s'accroît donc quand la paroi poreuse s'encrasse.

b) L'analyse de la fonction $v_1 = g(k_x)$ montre que cette fonction tend vers 0 lorsque $k_x$ croît et tend vers l'infini. Or les équations écrites ci-dessus ne sont valables que si $v_1$ est très supérieure à une valeur $v_{mf}$, vitesse minimale de fluidisation pour la matière considérée.

Ainsi, par la mesure permanente et éventuellement l'enregistrement de la pression différentielle $P_{f1} - P_{f2}$, il est possible:

- de suivre l'évolution de l'encrassement de la paroi poreuse dans la zône de décantation des "sables" et des "scales".
- de déclencher automatiquement ou manuellement le nettoyage de l'appareil en fixant une valeur de consigne pour $P_{f1} - P_{f2}$, correspondant à une vitesse proche mais supérieure à la vitesse minimale de fluidisation en dessous de laquelle l'appareil ne peut pas fonctionner.

Exemple 1

Un système d'alimentation de cuves d'électrolyse d'aluminium a été réalisé selon le principe de l'invention.

La partie gauche du caisson, située sous la conduite d'alimentation, a une longueur, mesurée dans le sens du plan de la figure 3 d'environ 26 cm et une largeur d'environ 20 cm. La partie droite du caisson a une longueur de 16 cm environ et une largeur de 20 cm. La paroi poreuse dans la partie droite est située à 10 cm au dessus de la paroi poreuse dans la partie gauche.

Au début de fonctionnement, lorsque les parois poreuses sont libres de tout colmatage, on note les paramètres suivants:

Pression de fluidisation $P_{f1} = 650$ mm de colonne d'eau (6375 Pa)

Pression de fluidisation $P_{f2} = 600$ mm de colonne d'eau (5884 Pa)

Hauteur du lit dans la colonne d'équilibrage = 58 cm.

Avec un diamètre d'orifice de sortie de 19 mm, on obtient un débit d'alumine de 25000 g/minute.

La différence des pressions de fluidisation, initialement de 50 mm d'eau (490 Pa), croît progressivement en cours de fonctionnement; elle est enregistrée en continu et lorsqu'elle atteint la valeur de 90 mm d'eau (883 Pa), on arrête l'installation et on procède au décolmatage de la paroi poreuse.

Cet exemple est donné uniquement à titre illustratif; il est clair que le dimensionnement des surfaces poreuses, le rapport entre les surfaces poreuses "gauche" et "droite", la différence de cote entre ces surfaces dépendent de la nature du produit alimenté, de sa teneur en sobles ou en scales, du débit à assurer et du temps admissible entre deux nettoyages successifs.

5

Exemple 2

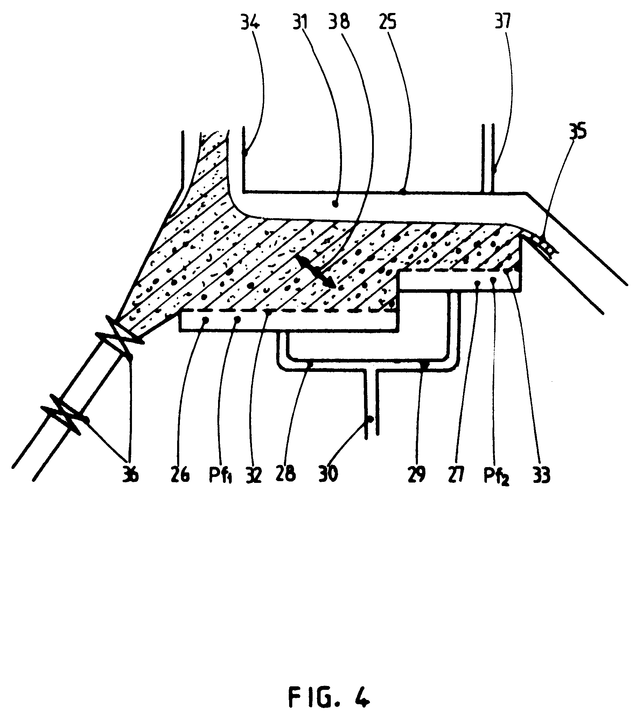

L'objet de la présente invention a été appliqué au dispositif revendiqué dans le brevet français FR 2 575 680.Cette application est représentée sur la figure 4.

Elle permet la séparation d'un matériau pulvérulent fluidisable d'un matériau non fluidisable qui lui est mélangé.Une enceinte (25),suspendue par des moyens élastiques non représentés, se compose de deux caissons inférieurs (26) et (27) alimentés en gaz de fluidisation par les deux branches (28) et(29) issues d'une canalisation commune (30) et d'un caisson supérieur commun (31).Les deux caissons sont séparés par une paroi poreuse en deux parties (32) et (33),le caisson (26) et la paroi poreuse (32) du côté de l'alimentation en matériau étant situés plus bas que le caisson (27) et la paroi poreuse (33).Le caisson supérieur comporte:

- une alimentation (34) en mélange de matériau fluidisable et non fluidisable
- une surverse (35) pour l'évacuation de la phase fluidisée
- un système de sas (36) pour l'évacuation de la phase solide non fluidisée décantée sur la partie (32) de la paroi poreuse
- une tubulure d'évacuation du gaz de fluidisation (37)
- un système de vibration communiquant à la paroi poreuse un mouvement alternatif ayant la direction de la flèche (38)

Au cours du fonctionnement,les particules de matière non fluidisables vont se déposer sur la paroi poreuse (32),entrainant une augmentation de la différence de pression $P_{f1}-P_{f2}$.Lorsque cette différence atteint une valeur prédéterminée,la mise en route du système de vibration et l'ouverture du sas (36) sont déclenchées automatiquement ce qui provoque le décolmatage de la paroi poreuse.Une fois que la différence de pression est revenue à son niveau initial,la vibration est arrêtée et le sas refermé.

Exemple 3

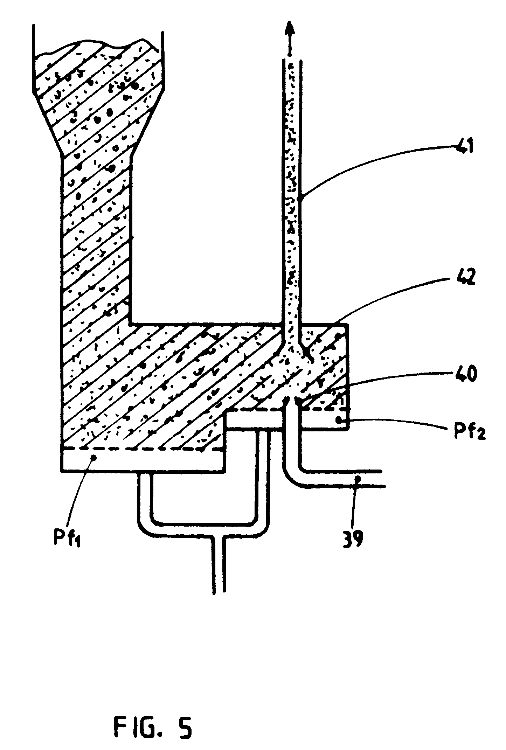

L'objet de la présente invention a été appliqué au procédé revendiqué dans le brevet français FR 2 391 136.Cette application est représentée sur la figure 5.Un certain nombre de caractéristiques déjà décrites dans les exemples précédents se retrouvent sur cette figure:l'enceinte de fluidisation avec le caisson inférieur et la paroi poreuse en deux parties décalées verticalement,la colonne d'alimentation en produit pulvérulent.Le dispositif comprend en plus une conduite d'alimentation en gaz surpressé (39) débouchant,au-dessus de la paroi poreuse par un injecteur (40) et une conduite destinée au transport pneumatique (41) équipée d'une tuyère (42) située à la verticale de l'injecteur.Ainsi que cela est expliqué dans le brevet FR 2 391 136,ce système permet une régulation automatique du débit de matière pulvérulente.Cependant le fonctionnement pouvant être perturbé par la présence de matière non fluidisable,l'adjonction du système à deux niveaux de paroi poreuse et le contrôle de la différence des pressions de fluidisation permet de détecter le degré de colmatage de la paroi poreuse et de procéder à temps au nettoyage de cette paroi.

**Revendications**

1. Dispositif de manutention de matière pulvérulente en lit fluidisé mélangée à des produits non fluidisables muni d'un système de détection de colmatage, comportant :
   a) un moyen de stockage de la matière pulvérulente (13);
   b) un moyen de fluidisation constitué d'un caisson (14) en deux parties: une partie supérieure reliée à l'une de ses extrêmités au moyen de stockage (13) par une colonne d'alimentation (15) et à l'extrêmité opposée à une colonne d'équilibrage (16) et une partie inférieure d'arrivée du gaz de fluidisation elle-même divisée en deux volumes indépendants (18, 20) alimentés en gaz de fluidisation par une même canalisation (22) divisée en deux branches (23 et 24) et séparés de la partie supérieure par deux parois poreuses (19 et 21), la première paroi poreuse (19) étant située sous la colonne d'alimentation et dans la région voisine et la deuxième paroi poreuse (21) étant située sous la colonne d'équilibrage et dans la région voisine;
   c) un moyen d'évacuation de la matière pulvérulente situé dans la partie supérieure du caisson,à l'extremité opposée à la colonne d'alimentation;
   caractérisé en ce que la première paroi poreuse (19) est située à un niveau horizontal inférieur à celui de la deuxième paroi poreuse (21) et en ce que le dispositif est muni de moyens de mesure et d'enregistrement en fonction du temps de la différence des pressions régnant dans chacun des deux volumes indépendants (18) et (20).

2. Dispositif selon la revendication 1, caractérisé en ce que le moyen d'évacuation du produit fluidisé est constitué d'un orifice de sortie (17) de la matière pulvérulente situé immédiatement au-dessus de la paroi poreuse du côté de la colonne d'équilibrage.

3. Dispositif selon la revendication 1, caractérisé en ce qu'il est muni d'un système de vibration pouvant communiquer à la paroi poreuse un mouvement alternatif, d'un système de sas permettant l'évacuation de la phase solide non fluidisée décantée sur la partie la plus basse de la paroi poreuse et en ce que le moyen d'évacuation du produit fluidisé est constitué d'une surverse située à la partie du caisson supérieur opposée à celui de la colonne d'alimentation.

4. Dispositif selon la revendication 1, caractérisé en ce que le moyen d'évacuation du produit fluidisé est constitué :
a) d'une conduite d'alimentation en gaz surpressé (39) débouchant par un injecteur (40) dans la partie supérieure du caisson au-dessus de la paroi poreuse, du côté opposé à la colonne d'alimentation,
b) d'une conduite de transport verticale (41) équipée à sa base d'une tuyère (42) située à la verticale et au dessus de l'injecteur.

5. Procédé de détection de colmatage utilisant le dispositif de l'une quelconque des revendications 1 à 4 caractérisé en ce que l'on contrôle en continu l'augmentation de la différence de pression entre les deux volumes indépendants de la partie inférieure du caisson et que lorsque cette différence de presion dépasse une valeur de consigne prédéterminée, on procède au décolmatage de la paroi poreuse.

**Claims**

1. Apparatus for handling pulverulent material in a fluidized bed mixed with non-fluidizable products and equipped with a clogging detection system comprising:
a) a pulverulent material storage means (13),
b) a fluidization means constituted by a two-part container (14), namely an upper part connected at one of its ends to the storage means by means of a supply column (15) and by its opposite end to a balancing column (16) and a lower, fluidization gas supply part, itself subdivided into two independent volumes (18, 20) supplied with fluidization gas by the same pipe (22) subdivided into two branches (23, 24) and separated from the upper part by two porous walls (19, 21), the first porous wall (19) being located below the supply column and in the adjacent region and the second porous wall (21) being located below the balancing column and in the adjacent region,
c) a discharge means for the pulverulent material located in the upper part of the container, at the end opposite to the supply column,
characterized in that the first porous wall (19) is located at a horizontal level below that of the second porous wall (21) and in that the apparatus is provided with measuring and recording means dependent on the time of the difference of the pressures in each of the two independent volumes (18 and 20).

2. Apparatus according to claim 1, characterized in that the discharge means for the fluidized product is constituted by a pulverulent material outlet (17) located immediately above the porous wall on the side of the balancing column.

3. Apparatus according to claim 1, characterized in that it is provided with a vibrating system able to impart to the porous wall an alternating movement, a lock system permitting the discharge of the non-fluidized solid phase which has settled on the lowest part of the porous wall and in that the fluidized material discharge means is constituted by an overflow located in that part of the upper container which is opposite to that of the supply column.

4. Apparatus according to claim 1, characterized in that the fluidized material discharge means is constituted by:
a) an overpressure gas supply pipe (39) issuing by an injector (40) into the upper part of the container above the porous wall on the side opposite to the supply column,
b) a vertical conveying pipe (41) equipped in its bottom with a nozzle (42) positioned vertically and above the injector.

**5.** Process for the detection of clogging using an apparatus according to any one of the claims 1 to 4, characterized in that there is a continuous check for an increase in the pressure difference between the two independent volumes of the lower part of the container and that when said pressure difference exceeds a set point, the porous wall is cleaned.

**Patentansprüche**

**1.** Vorrichtung zur Fließbettförderung von mit nicht fluidisierbaren Stoffen vermischtem pulverförmigem Material, mit einem System zur Detektion von Verstopfungen, mit:

a) einer Speichereinrichtung (13) für das pulverförmige Material;

b) einer Fluidisierungseinrichtung, die aus einem zweiteiligen Gehäuse (14) gebildet ist, mit einem oberen Teil, der an einem seiner Enden mit der Speichereinrichtung (13) durch eine Zufuhrsäule (15) und am gegenüberliegenden Ende mit einer Ausgleichssäule (16) verbunden ist, und mit einem unteren Teil zur Zufuhr des Fluidisierungsgases, der seinerseits in zwei unabhängige, durch dieselbe, in zwei Zweige (23 und 24) aufgeteilte Rohrleitung (22) mit Fluidisierungsgas versorgte Volumina (18, 20) unterteilt ist, die von dem oberen Teil durch zwei poröse Wände (19 und 21) getrennt sind, wobei die erste poröse Wand (19) unter der Zufuhrsäule und in dem umliegenden Bereich und die zweite poröse Wand (21) unter der Ausgleichssäule und im umliegenden Bereich angeordnet ist;

c) einer im oberen Teil des Gehäuses an dem der Zufuhrsäule gegenüberliegenden Ende angeordneten Ausgabeeinrichtung für das pulverförmige Material;

**dadurch gekennzeichnet**, daß

die erste poröse Wand (19) auf einem niedrigeren horizontalen Niveau als die zweite poröse Wand (21) angeordnet ist, und daß die Vorrichtung mit Einrichtungen zum Messen und Aufzeichnen der Differenz zwischen den in den beiden unabhängigen Volumina (18) und (20) herrschenden Drücken als Funktion der Zeit versehen sind.

**2.** Vorrichtung nach Anspruch 1, dadurch gekennzeichnet, daß die Ausgabeeinrichtung für das fluidisierte Produkt aus einer Ausgangsöffnung (17) für das pulverförmige Material besteht, die umittelbar oberhalb der porösen Wand auf der Seite der Ausgleichssäule angeordnet ist.

**3.** Vorrichtung nach Anspruch 1, dadurch gekennzeichnet, daß sie mit einem Schwingsystem, das eine Hin- und Herbewegung auf die poröse Wand übertragen kann, und einem Schleusensystem versehen ist, das die Ausgabe der nicht fluidisierten, auf dem untersten Bereich der porösen Wand dekantierten festen Phase ermöglicht, und daß die Ausgabeeinrichtung für das fluidisierte Produkt aus einem Überlauf gebildet ist, der an dem Teil des oberen Gehäuses angeordnet ist, der der Zufuhrsäule gegenüberliegt.

**4.** Vorrichtung nach Anspruch 1, dadurch gekennzeichnet, daß die Ausgabeeinrichtung für das fluidisierte Produkt gebildet ist aus:

a) einer Zufuhrleitung für Druckgas (39), die über einen Injektor (40) in das obere Teil des Gehäuses oberhalb der porösen Wand an der der Zufuhrsäule gegenüberliegenden Seite mündet,

b) einer vertikalen Transportleitung (41), die an ihrer Basis mit einer vertikal und oberhalb des Injektors angeordneten Düse (42) versehen ist.

**5.** Verfahren zur Detektion von Verstopfungen unter Verwendung der Vorrichtung nach einem der Ansprüche 1 bis 4, dadurch gekennzeichnet, daß kontinuierlich der Zuwachs der Druckdifferenz zwischen den zwei unabhängigen Volumina des unteren Teils des Gehäuses kontrolliert wird, und daß, wenn diese Druckdifferenz einen vorgegebenen Schwellwert übersteigt, eine Reinigung der porösen Wand vorgenommen wird.

FIG. 1

FIG. 2

FIG. 3

FIG. 4

FIG. 5